# EUROPÄISCHE PATENTSCHRIFT

(11) **EP 2 140 167 B1**
(45) Veröffentlichungstag und Bekanntmachung des Hinweises auf die Patenterteilung: **29.06.2011**
(21) Anmeldenummer: 08734768.8
(22) Anmeldetag: 26.03.2008
(51) Int. Cl.: F16D 65/32

(54) **KOMPAKT-KOMBIBREMSZYLINDER MIT PNEUMATISCH BETÄTIGBAREM SPERRMECHANISMUS**
COMPACT COMBINATION BRAKE CYLINDER COMPRISING A PNEUMATIC LOCKING MECHANISM
CYLINDRE DE FREIN COMBINÉ COMPACT COMPORTANT UN MÉCANISME DE BLOCAGE À ACTIONNEMENT PNEUMATIQUE

(30) Priorität: 27.03.2007 DE 102007015209
(43) Veröffentlichungstag der Anmeldung: 06.01.2010
(73) Patentinhaber: Knorr-Bremse Systeme für Nutzfahrzeuge GmbH, 80809 München (DE)
(72) Erfinder: IRASCHKO, Johann, 85301 Schweitenkirchen (DE)
(74) Vertreter: Mattusch, Gundula
(86) Internationale Anmeldenummer: PCT/EP2008/002367
(87) Internationale Veröffentlichungsnummer: WO 2008/116632

(56) Entgegenhaltungen:
- DE-A1- 19 933 165
- DE-A1-102005 044 708

## Beschreibung

Die Erfindung betrifft einen Bremszylinder für pneumatisch betätigte Fahrzeugbremsen, insbesondere für Nutzfahrzeuge, nach dem Oberbegriff des Anspruchs 1.

Die Feststellbremse wird bei schweren Nutzfahrzeugen mittels so genannter Federspeicherzylinder betätigt. Die Bremsbetätigungskraft wird hierbei über eine gespannte Feder erzeugt, so dass den Anforderungen an eine mechanisch wirkende Feststellbremse genüge getan ist.

Da die Federspeicherzylinder in der Regel dazu ausgelegt sind, sehr hohe Kräfte zu erzeugen, ist ein manuelles Lösen im Betriebsfall nicht mehr sinnvoll. Das Lösen der Feststellbremse geschieht daher bei pneumatisch betätigten Bremsen mittels Druckluft.

Um dies zu ermöglichen, sind Federspeicherzylinder in der Regel mit einem Lösekolben ausgerüstet. Mit diesem Kolben ist es möglich, bei einer Einleitung von Druckluft die Feder soweit zusammen zu drücken, bis die Bremse gelöst ist. Damit die Feststellbremse während der Fahrt nicht eingelegt ist, wird der Kolben ständig mit Druckluft beaufschlagt, so dass sich die Feder nicht entspannen kann und somit die Feststellbremse nicht zur Wirkung kommt.

Die üblichste Bauform ist der so genannte Kombizylinder. Ein Kombizylinder besteht aus bzw. kombiniert zwei verschiedene Bremszylinderarten, nämlich einem Federspeicherzylinder für die Feststellbremsanlage (FBA) und einem Druckluftzylinder (meist einen Membranzylinder) für die Betriebsbremsanlage (BBA).

Üblicherweise sind die beiden Zylinder hintereinander, in axialer Richtung angeordnet. Hinter dem Membranteil des Kombizylinders ist der Federspeicherteil angeordnet, welcher mit seiner Kolbenstange auf den Kolbenteller des Membranzylinders und von diesem auf den Bremshebel wirkt.

Diese Bauform benötigt relativ viel Bauraum. Durch die Einführung aufwendigerer Fahrwerkssysteme, wie z.B. Einzelradaufhängungen, Leichtbauachsen etc. wird der Bauraum jedoch zunehmend limitiert.

Es gibt daher Bestrebungen durch andere Bauformen und Wirkungsweisen den Platzbedarf für den Feststellbremszylinder zu minimieren.

Eine kompaktere Bauform bietet insofern der so genannte Kompaktkombizylinder. Einen derartigen Bremszylinder offenbart die DE 10 2005 044 708 A1. Nach dieser Erfindung wird die Funktion des Feststellbremszylinders direkt in den Betriebsbremszylinder integriert. Die Federspeicherfeder wird hierbei nicht mehr über einen separaten Federspeicherkolben betätigt sondern ebenfalls über den Kolben des Betriebsbremszylinders. Um die Feststellbremse zu lösen, wird für eine kurze Zeitspanne der BBA-Kolben mittels einer speziellen Ansteuerung mit Druckluft beaufschlagt. Da die dabei entstehende Kolbenkraft größer ist als die maximale Druckkraft der Speicherfeder, wird diese zusammengedrückt. Anschließend wird mit einem pneumatisch betätigten Sperrmechanismus die Feder arretiert und anschließend der Zylinderkolben entlüftet. Nun kann der Zylinderkolben mit der komprimierten und arretierten Speicherfeder durch die Kolbenrückstellfeder in die Ruhestellung gebracht werden.

Das Einlegen der Feststellbremse erfolgt durch die Entlüftung des pneumatisch betätigbaren Sperrmechanismus der Federspeicherfeder.

Der Sperrmechanismus stellt eine sehr wichtige Funktionseinheit für die Gesamtfunktion des Kompaktkombizylinders dar. An das Funktionsverhalten und die Zuverlässigkeit dieser Komponente werden deshalb hohe Anforderungen gestellt.

Der Mechanismus kann auf unterschiedliche Weise dargestellt werden. Eine Möglichkeit besteht darin, die Feder über eine nicht selbst hemmende Gewindespindel zu arretieren. Hierzu ist es erforderlich, die Gewindespindel durch einen pneumatisch schaltbaren Klemmmechanismus bzw. Sperrmechanismus zu arretieren.

Es ist daher die Aufgabe der Erfindung, einen Bremszylinder der gattungsgemäßen Art mit einem funktionssicheren und dennoch mit überschaubarem konstruktiven Aufwand realisierbaren Klemmmechanismus zu versehen.

Die Erfindung löst diese Aufgabe durch den Gegenstand des Anspruchs 1.

Vorteilhafte Ausgestaltungen sind den Unteransprüchen zu entnehmen.

Um die Gewindespindel zu arretieren bzw. zu lösen, ist die pneumatisch betätigte Kupplung vorteilhaft. Bei Kupplungen gibt es grundsätzlich zwei unterschiedliche Wirkprinzipien, einerseits die so genannten Reibungskupplungen, anderseits die so genannten Klauenkupplungen. Beide Varianten werden genutzt.

Die Erfindung realisiert einen Bremszylinder mit einem einfach aufgebauten und herstellbaren Klemmmechanismus, der eine sichere Klemmwirkung bei allen möglichen Betriebsbedingungen bietet. Hervorzuheben sind einerseits die hohe Rüttelsicherheit, das einwandfreie und reproduzierbare Löseverhalten, die hohe Dauerfestigkeit und die hohe Verschleißfestigkeit und andererseits der geringe Bauraumbedarf der Konstruktion.

Nachfolgend wird die Erfindung unter Bezug auf die Zeichnung anhand eines Ausfiihrungsbeispiels näher erläutert. Es zeigen:
- Figur 1: einen Kompakt-Kombibremszylinder im Halbschnitt, in der Lösestellung und in der Feststellbremsstellung
- Fig. 2: eine Detailansicht aus Fig. 1;
- Fig. 3 bis 6: eine teilgebrochene Darstellung von Elementen einer manuell betätigba- ren Lösevorrichtung des Kompakt-Kombibremszylinders aus Fig. 1 und 2 in verschiedenen Betriebszuständen;
- Fig. 7: eine halbgeschnittene Darstellung einer Variante des Kompakt- Kombibremszylinders aus Fig. 1;
- Fig. 8 - 15: Detailansichten weiterer erfindungsgemäßer Kompakt- Kombibremszylinder.

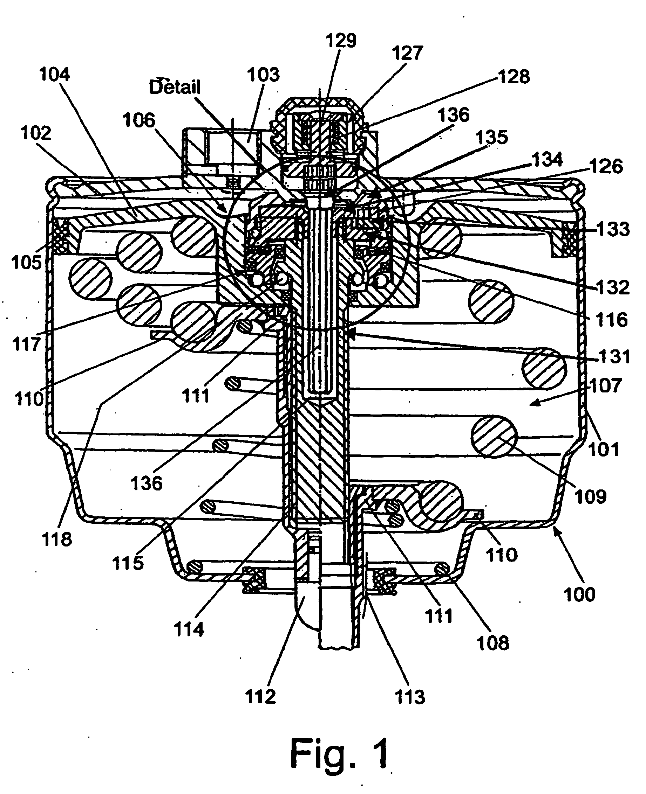

Fig. 1 zeigt einen Schnitt durch einen erfindungsgemäßen Kompakt-Kombibremszylinder 100, wobei in der linken Hälfte der Zeichnung der Federspeicher in gelöster Stellung und in der rechten Hälfte der Zeichnung der Federspeicher in eingelegter Stellung dargestellt ist.

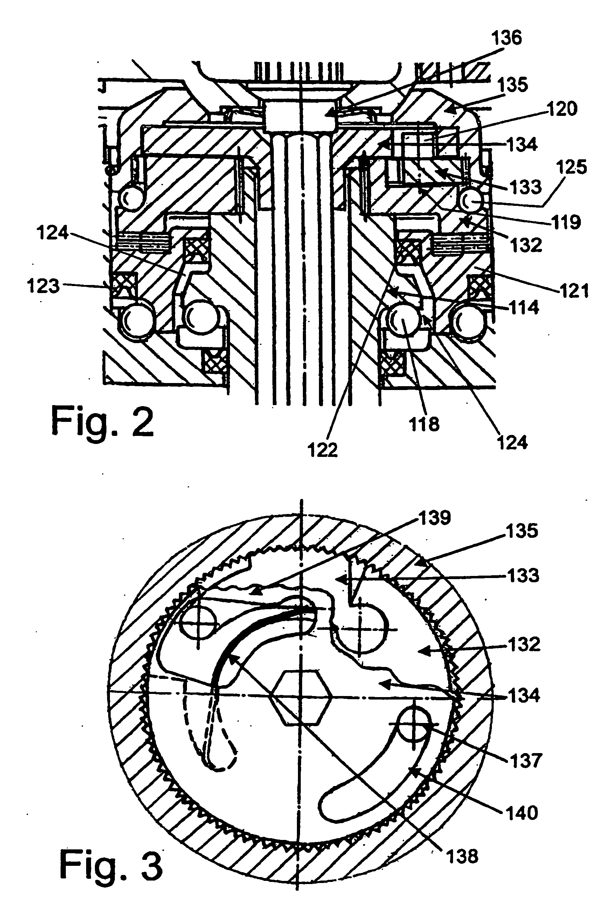

Der in den Figuren 1 bis 3 dargestellte Bremszylinder 100 weist ein topfförmiges - vorzugsweise im Wesentlichen zylindrisches - Gehäuse 101 auf.

Das Gehäuse 101 ist an einem seiner Enden von einem Deckel 102 verschlossen, der mit wenigstens einem oder mehreren Druckluftanschlüssen 103 versehen ist.

In dem topfförmigen Gehäuse 101 ist ein Kolben 104 mit einem Kolbendichtring 105 angeordnet, dessen Durchmesser samt dem Kolbendichtring 105 dem Innendurchmesser des Gehäuses 101 entspricht.

Der Kolben 104 kann durch den Druckluftanschluss 103 mit Druckluft beaufschlagt werden, die auch durch diesen Anschluss ausströmen kann.

Wie Fig. 1 zeigt, ist der Kolben 104 im mittleren Bereich abgesenkt, so dass ein Druckraum 106 entsteht.

Durch den Kolben 104 wird noch ein weiterer Raum 107 begrenzt, in den eine kegelige Rückholfeder 108 und eine Federspeicherfeder 109 eingesetzt ist.

Die Federspeicherfeder 109 ist zwischen den Kolben 104 und einen Federspeicherkolben 110 gesetzt, dessen Durchmesser kleiner ist als der Innendurchmesser des Gehäuses.

Die Rückholfeder 108 ist zwischen die von der Federspeicher abgewandte Seite des Federspeicherkolbens 110 und den vom Deckel abgewandte inneren Endbereich des Gehäuses 101 gesetzt.

Der Federspeicherkolben 110 liegt an seinem Innenumfang auf einem Kragen 111 einer Kolbenstange 112, die eine im Gehäuse 101 auf dessen vom Deckel 102 abgewandten Ende ausgebildete Öffnung 113 durchsetzt und zur Betätigung einer Zuspannvorrichtung einer Bremse dient.

Ein pneumatisch betätigbarer Sperrmechanismus 116 ist in einem mittigen Aufnahmeraum 117 des Kolben 104 an dessen zum Deckel 102 gewandten Seite des Kolbens 104 untergebracht, welcher den Sperrmechanismus aufnimmt.

Die Kolbenstange 112 ist hülsenförmig gestaltet und mit einem Innengewinde versehen, in dass eine mit Außengewinde versehene Gewindespindel 114 eingreift. Die Gewindespindel 114 ist nicht selbsthemmend ausgelegt. Sie ist vorzugsweise an einem ihrer Enden direkt oder über Zwischenelemente mit dem pneumatisch betätigbaren Sperrmechanismus gekoppelt, der hier in Form einer pneumatisch betätigbaren Kupplung ausgebildet ist. Im dargestellten Ausführungsbeispiel ist dieser Sperrmechanismus als formschlüssige Kupplung 116 ausgebildet.

Die Kupplung 116 ist hier in vorteilhafter und kompakt bauender Weise zwischen den Axialflächen einer noch zu erläuternden Lagerscheibe 132, die mit der Gewindespindel drehfest gekoppelt ist, und einem Sperrmechanismuskolben 121 ausgebildet.

Der Sperrmechanismuskolben 121 ist an seinem Innen- und seinem Außenumfang mittels Kolbenringdichtungen 122, 123 gegen die Gewindespindel 114 und den Aufnahmeraum 117 abgedichtet.

Der Sperrmechanismuskolben 121 ist über einen Druckraum 124 über eine Druckluftleitung (hier nicht dargestellter Weise) mit Druckluft beaufschlagbar, wodurch die Kupplung 116 in Eingriff gebracht werden kann. Die Gewindespindel 114 ist entsprechend durch Druckluftbeaufschlagung des Druckraums 124 unterhalb des Sperrmechanismuskolbens 121 an Drehungen gehindert, so dass die FBA-Bremse außer Funktion setzbar ist.

Die Gewindespindel 114 ist über Wälzkörper 118 am Kolben 104 abgestützt.

In der linksseitigen Stellung der Fig. 1 ist die Kupplung 116 geschlossen bzw. der pneumatisch betätigbare Sperrmechanismus aktiviert, so dass die Gewindespindel 114 gegen Drehungen gesichert ist.

Soll nun der Federspeicherkolben 110 in die in der rechtsseitigen Darstellung der Fig. 1 dargestellte Feststellbremsstellung überführt werden, wird die von dem Sperrmechanismuskolben 121 in die Kupplung 116 geleitete Kraft durch Druckabsenkung im Raum 124 verringert, so dass die von der Federspeicherfeder 109 aufgebrachte Kraft bewirkt, dass sich die Gewindespindel 114 dreht, wobei der Federspeicherkolben 110 mit der Kolbenstange 112 in der Bremsposition verschoben wird.

Die Drehzahl ist durch die Bremskraft der Kupplung 116 regelbar, so dass auch die lineare Bewegung des Federspeicherkolbens 110 gesteuert werden kann.

Zum Lösen der Bremsstellung wird entsprechend der vorherigen Ausführung der Druckraum 106 mit Druck beaufschlagt. Da der Feststellbremskolben 121 jetzt drucklos ist, kann sich die Gewindespindel 114 verdrehen und der Federspeicherkolben 110 wird entgegen der Wirkung der Federspeicherfeder 109 in die Ausgangsstellung zurückgefahren.

Bei Betriebsbremsungen bleibt die Kupplung 116 in Bremsstellung, so dass die beiden Kolben 104, 110 gemeinsam in die Bremsstellung bewegt werden, ohne ihre relative Stellung zueinander zu verändern. Die Wirkung der Federspeicherfeder 109 kann sich in diesem Zustand nicht entfalten. Analoges gilt für das Lösen der Bremse nach Betriebsbremsungen.

Bei dem Kompaktkombizylinder 100 ist die Funktion des Feststellbremszylinders in den Betriebsbremszylinder integriert. Die Federspeicherfeder 109 wird hierbei nicht mehr über einen separaten Federspeicherkolben betätigt sondern über den Kolben 104 des Betriebsbremszylinders. Um die Feststellbremse zu lösen, wird für eine kurze Zeitspanne der BBA-Kolben mittels einer speziellen Ansteuerung mit Druckluft beaufschlagt.

Wie vorstehend beschrieben, erfolgt das Lösen der Feststellbremse bzw. des Feststellbremsabschnittes im Regelfall mit Hilfe von Druckluft.

Daneben ist es erfindungsgemäß aber auch möglich, den Feststellbremsabschnitt bei einem Druckverlust manuell mit einer manuell betätigbaren Lösevorrichtung zu lösen.

Bei konventionellen Kombizylindern wird dazu die Feder mit Hilfe einer Gewindespindel (der so genannten Lösespindel) zurückgezogen. Die Funktion des Betriebsbremszylinders ist dadurch nicht beeinträchtigt.

Beim Kompaktkombizylinder kann dies nicht auf so einfache Weise dargestellt werden, da der BBA-Kolben und die Federspeicherfeder mit einander verbunden sind. Würde man die Federspeicherfeder 109 durch eine von außen zugängliche Gewindespindel zurückziehen, wäre auch der BBA-Kolben blockiert und folglich auch die Funktion des BBA-Zylinders nicht mehr gegeben.

Zum manuellen Lösen der Federspeicherfeder ist ein daher eine manuell betätigbare Lösevorrichtung vorteilhaft, die es ermöglicht, die Federspeicherwirkung bei Druckverlust ohne Beeinträchtigung der BBA-Funktion aufzuheben. Ferner soll es möglich sein, nach dem Lösevorgang die FBA-Wirkung durch einen manuellen Vorgang wieder herzustellen. Dies wird dadurch erreich, dass der manuell betätigbaren Lösevorrichtung eine ebenfalls manuell betätigbare Sperrvorrichtung zugeordnet ist. Die im Anschluss dargestellte und näher beschriebene Sperrvorrichtung basiert auf einem Ratschenmechanismus.

Der Ratschenmechanismus weist eine Lagerscheibe 132 auf, die mit der Gewindespindel 114 drehfest gekoppelt oder einstückig mit dieser ausgebildet ist. Sie ist mit Wälzkörpern 125 an einer Topfscheibe 135 abgestützt und je nach Funktionsstellung der Sperrvorrichtung, die zwischen diesen beiden Elementen 132, 135 wirkt, relativ zu dieser drehbar. Diese Lagerscheibe 132 weist eine Ausnehmung 119 für eine Sperrklinke 133 auf und einen Stift 137, der zur Drehmomentübertragung dient. Die Sperrklinke 133 ist drehbar in die Lagerscheibe 132 eingesetzt, durch einen angeformten Bolzen 120 mit der Steuerscheibe 134 verbunden und wird durch eine Blattfeder 138 radial nach außen gedrückt.

Der Ratschenmechanismus umfasst ferner eine Steuerscheibe 134 mit einer Steuerkontur 139, einem bogenförmigen Langloch 140 und einem mittig angeordneten sechskantförmigen Durchbruch.

Die Steuerkontur 139 dient zur Ein- und Ausschaltung der Sperrklinke 133. Das bogenförmige Langloch 140 dient dagegen ab einem bestimmten Winkelweg zur Übertragung des Drehmoments auf die Lagerscheibe 132. Der Innensechskant dient zur Einleitung des Drehmoments in die Steuerscheibe 134.

Ein profilierter Betätigungsdorn 136 dient zur Einleitung des manuell aufgebrachten Drehmoments.

Ferner dient er zur Ein- und Ausschaltung des Mechanismus. Der Betätigungsdorn 136 ist im Gehäuse 101 des Bremszylinders dreh und schwenkbar gelagert.

Der Ratschenmechanismus umfasst ferner die Topfscheibe 135 mit Innenverzahnung, welche mit der Sperrklinke 133 mit entsprechender Verzahnung beim manuellen Lösevorgang im Eingriff ist. Die Topfscheibe 135 stützt sich am Kolben 104 ab und ist relativ zu diesem nicht verdrehbar.

Da es sich um einen formschlüssigen Ratschenmechanismus handelt, ist eine sichere und schlupffreie Arretierung der Federspeicherfeder gewährleistet.

Die Funktion dieser Anordnung ist wie folgt.

Beim manuellen Lösen der Federspeicherfeder 109 muss die Gewindespindel 114 mit Hilfe eines Schraubenschlüssels zurückgedreht werden.

Das Drehmoment wird dabei über den Betätigungsdorn 136 in die Steuerscheibe 134 übertragen. Durch das Verdrehen der Steuerscheibe 134 relativ zur Lagerscheibe 132 wird die Sperrklinke 133 durch die Steuerkontur 139 zum Eingriff in die Verzahnung der Topfscheibe 135 freigegeben. Die Sperrklinke 133 wird dabei durch die Blattfeder 138 elastisch gegen die Innenverzahnung der drehfesten Topfscheibe 135 gedrückt. Gleichzeitig wird nach der Überdrehung des Steuerwinkels über das bogenförmige Langloch 140 und einem entsprechenden Stift 137 in der Lagerscheibe 132 das Drehmoment von der Steuerscheibe 134 in die Lagerscheibe 132 und von dort in die Gewindespindel 114 übertragen.

Da die Sperrklinke 133 aufgrund der richtungsabhängigen Sperrwirkung ein selbsttätiges Zurückdrehen der Gewindespindel 114 verhindert, kann der Schraubenschlüssel ohne Aufdrehen der Gewindespindel 114 umgesetzt werden.

Dieser Vorgang kann solange wiederholt werden, bis die Federspeicherfeder die Lösestellung für die Feststellbremse erreicht hat.

Wenn die Federspeicherfeder von der Position "Federspeicher gelöst" manuell in die Position "Federspeicher eingelegt" gebracht werden soll, muss mit dem Schraubenschlüssel eine Drehbewegung in Sperrrichtung des Ratschenmechanismus ausgeführt werden. Dabei wird zunächst die Steuerscheibe 134 relativ zur Lagerscheibe 132 so weit verdreht, bis die Sperrklinke 133 durch die Steuerkontur 139 aus der Innenverzahnung der Topscheibe 135 gezogen wird. Sobald dieser Zustand erreicht wird, kann sich die Gewindespindel 114 verdrehen.

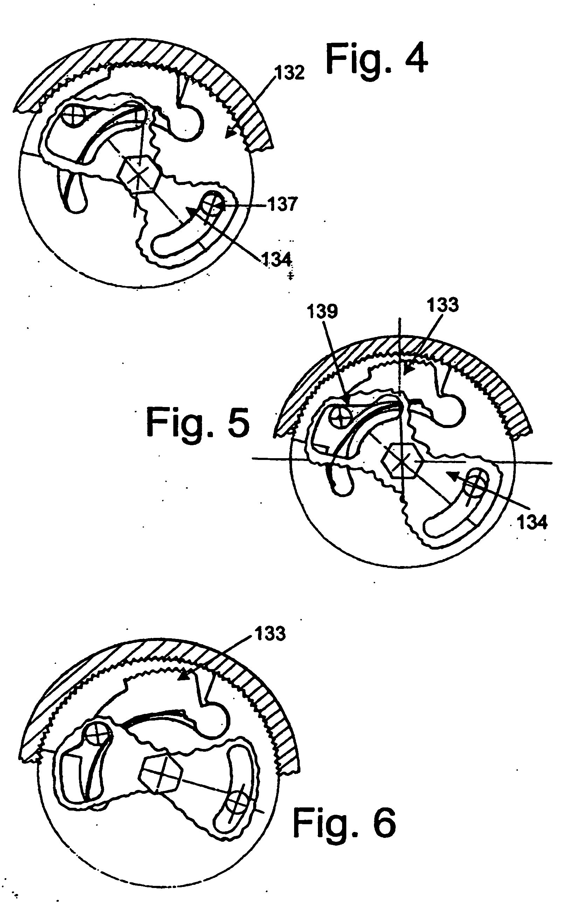

Fig. 5 zeigt ein derartiges manuelles Zustellen der Federspeicherbremse. Die Steuerscheibe 134 wird in dieser Figur nach links verdreht, wodurch die Sperrklinke 133 über die Kontur 139 aus der Verzahnung gezogen wird. Die Lagerscheibe 132 kann sich hierdurch bis zur nächsten Einrastung der Sperrklinke 133 drehen.

Da sich die Gewindespindel 114 schneller bewegt als die vom Schraubenschlüssel geführte Steuerscheibe 134 kommt es zu einer Relativbewegung zwischen Lagerscheibe 132 und Steuerscheibe 134 und folglich wieder zum Einrasten der Sperrklinke 133 in der Innenverzahnung der drehfesten Topfscheibe 135. Damit wird gewährleistet, dass sich die Gewindespindel 114 nur so weit und so schnell dreht, wie von der Drehbewegung des Schraubenschlüssels vorgegeben wird.

Hierzu ist es notwendig den Betätigungsdorn 136 mit Hilfe eines Schraubenschlüssels in Richtung "Federspeicherbremse einlegen" zu drehen bis eine weitere Drehung nicht mehr möglich ist. Dadurch wird erreicht, dass die Steuerscheibe 134 relativ zur Lagerscheibe 132 verdreht wird und der Schaltpin der Sperrklinke 133 in eine Einraststellung auf der Steuerkontur 139 gebracht wird.

In Fig. 6 ist die manuelle Lösevorrichtung in ihrer deaktivierten Stellung dargestellt. Die Sperrklinke 133 verharrt in ihrer Ruheposition.

Fig. 4 zeigt die Sperrstellung des Freilaufs. Die Lagerscheibe 132 wird durch die Steuerscheibe 134 über den Pin 137 nach rechts gedreht. Die Lagerscheibe 132 kann sich in dieser Stellung nicht selbsttätig nach links drehen.

Wie vorstehend beschrieben, wird beim manuellen Lösevorgang der Federspeicherbremse mit Hilfe des so genannten Betätigungsdorns 136 und des Ratschenmechanismus 126 die Gewindespindel 114 zum Zurückziehen der Speicherfeder 109 mit einem Schraubenschlüssel verdreht.

Der Betätigungsdorn 136 steht beim manuellen Lösevorgang in Kontakt mit der manuellen Drehvorrichtung 127 zum Ansetzen eines Betätigungswerkzeuges, insbesondere eines Schraubenschlüssels. Die Drehvorrichtung 127 ist so gestaltet, dass z.B. beim Zurückdrehen, sprich Lösen des Federspeichers eine äußere Buchse 128 durch eine spezielle Formgebung in axialer Richtung einen Weg (Hub) ausführt, bis eine Drehmomenteinleitung möglich ist.

Durch diesen Axialhub ergibt sich zwischen der äußeren Buchse 128 und einem inneren Bolzen 129 stirnseitig eine Abstufung. Aufgrund dieser eindeutigen Konturänderung kann der manuelle Lösezustand der Federspeicherbremse visuell erkannt bzw. ertastet werden.

Wie vorstehend unter anderem erläutert, ist die pneumatisch betätigte Kupplung 116 notwendig, um die Gewindespindel 114 zu arretieren bzw. zu lösen.

Nachfolgend sollen vorteilhafte Ausgestaltungen der Kupplung 116 vorgestellt werden.

Als Kupplung 116 eignen sich einerseits Reibungskupplungen und anderseits formschlüssig arbeitende Klauenkupplungen.

Eine Reibungskupplung hat den Vorteil eines stufenlosen und dosierbaren Ansprech- bzw. Löseverhaltens. Die Kupplungskraft wird jedoch durch das Reibwertniveau stark beeinflusst. Um ein möglichst konstantes Betriebsverhalten zu gewährleisten, ist deshalb ein stabiles Reibwertniveau erforderlich.

Bei der Klauenkupplung wird hingegen die Kupplungskraft nur unwesentlich von der Reibung beeinflusst. Haupteinflussgröße ist die Formgebung (Geometrie) und die Anpresskraft. Eine Dosierbarkeit ist jedoch kaum möglich.

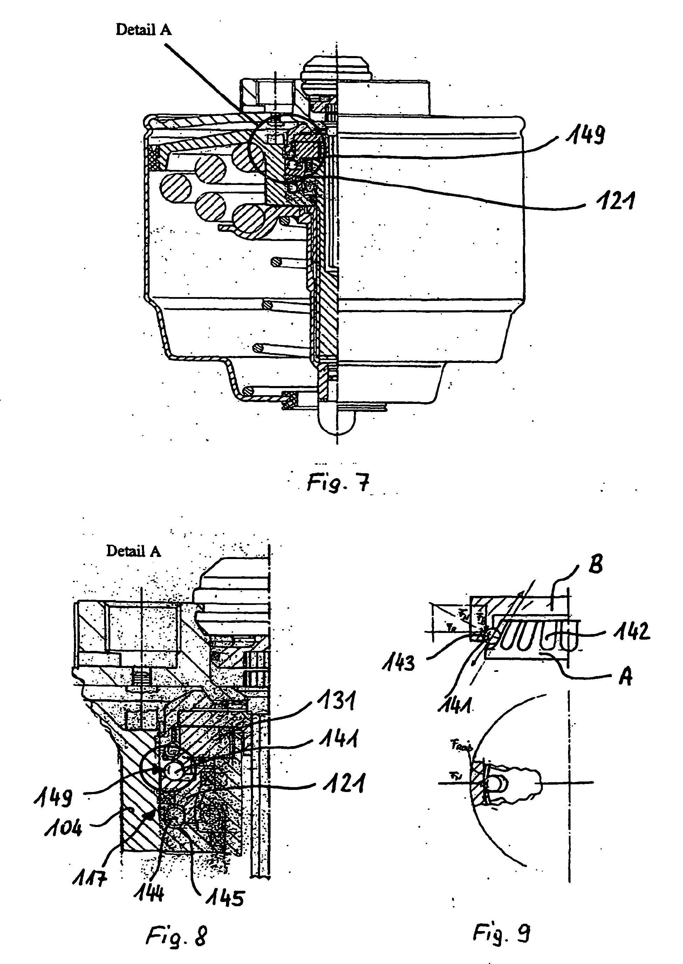

Fig. 7 und 8 zeigen eine auf Reibung basierende konstruktive Lösung.

Im konkreten Fall besteht die Problematik, dass die Kupplungskraft im Verhältnis zur Schließkraft relativ hoch ist. Daher ist es notwendig, durch einen Verstärkungseffekt die wirksame Anpresskraft zu erhöhen. Dies wird nach Fig. 7 und 8 durch eine Konuskupplung 149 erreicht.

Aufgrund der Kegelform ergibt sich, abhängig vom Kegelwinkel, eine Erhöhung der Anpresskraft und damit eine entsprechende Steigerung der übertragbaren Kupplungskraft.

Bei Konuskupplungen mit steilem Kegelwinkeln besteht jedoch die Schwierigkeit, dass das einwandfreie Lösen der Kupplung nicht mehr sicher gestellt ist. Bei Überschreitung eines bestimmten Reibwertniveaus kann es zum Festgehen der Kupplung kommen. Um dies zu vermeiden ist es daher erforderlich durch konstruktive Maßnahmen die Reibung in axialer Richtung möglicht gering und in tangentialer Richtung möglichst hoch und reibwertstabil zu halten. Die im Folgenden dargestellte konstruktive Ausführung wird diesen Anforderungen gerecht (Bild 7, 8 und 9).

Der Grundgedanke hierbei ist eine Haft- bzw. Gleitreibung in Umfangsrichtung und eine Rollreibung in axialer Richtung. Um dies zu erreichen werden als Übertragungselemente innerhalb der Kupplung 149 Kugeln 141 (Klemmkugel) verwendet. Die Klemmkugeln 141 liegen in der einen Kupplungshälfte A (Fig. 9) in so genannten Klemmtaschen 142. Die Klemmtaschen 142 sind so gestaltet, dass die Kugeln 141 in axialer Richtung ungehindert rollen können, dass aber in der tangentialen Richtung hingegen keine Bewegung möglich ist.

Durch die Neigung der Klemmtaschen 142 wird der Kegelwinkel für die Erhöhung der Klemmkraft eingestellt. Bei der anderen Kupplungshälfte B (Fig. 9) werden die Sperrkugeln in eine umlaufende, dem Kugeldurchmesser angepasste Rille 143 gedrückt, so dass eine für die Kupplungskraft bestimmende Reibung erzeugt wird.

Dieses Konzept bietet folgende Vorteile:
- Sehr gutes Löseverhalten der Kupplung, da die Kugeln 141 in axialer Richtung abrollen können
- Geringerer Einfluss des Schmierzustands auf die Reibung als bei konventionellen Reibkupplungen, da durch die punktuelle Berührung zwischen Klemmkugeln und Gegenfläche der Schmierfilm weggedrückt wird.
- Einfache Herstellung der Bauteile durch spanlose Umformtechnik

In Fig. 9 ist das Funktionsprinzip dargestellt, die Fig. 7 und 8 zeigen die Anwendung beim Kompaktkombizylinder, wo die Kupplungshälften A und B mit den Klemmtaschen 142 und der Rille 143 - je nach Auslegung - durch die Elemente 121 und 131 - gebildet werden.

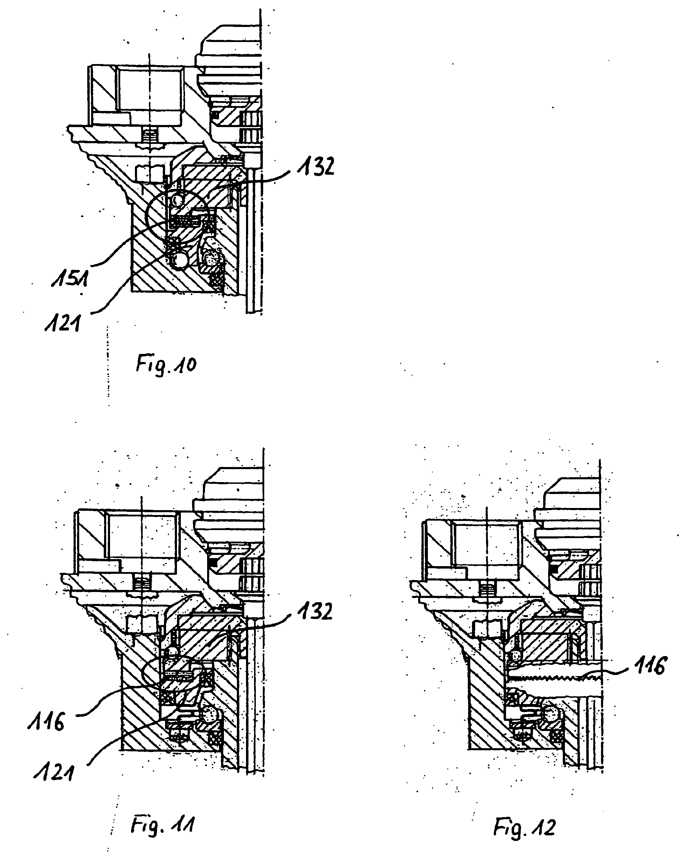

Eine weitere Möglichkeit für eine Reibungskupplung ist die so genannte Lammellenkupplung 151 der Fig. 10. Auch diese Kupplungsart bietet die Möglichkeit die Kupplungskraft zu erhöhen. Die Kupplungskraft kann dabei sehr einfach durch die Anzahl der Lamellen variiert werden. Diese Kupplungsart bietet den Vorteil der kompakten Bauweise.

Ein Ausführungsbeispiel im Zusammenhang mit dem Kompaktkombizylinder ist in Fig. 10 dargestellt.

Wie oben erwähnt gibt es auch die Möglichkeit eine Art Klauenkupplung 116 zu verwenden. Diese Kupplungsart bietet den Vorteil, dass für die Funktion die Reibung nur eine sehr geringe Rolle spielt. Damit ist gewährleistet, dass das Funktionsverhalten relativ unempfindlich gegenüber äußeren Einflüssen wie Schmierzustand, Temperaturniveau und Oberflächenbeschaffenheit ist.

Die Höhe der Kupplungskraft kann sehr einfach über die geometrische Formgebung der Verzahnung beeinflusst werden. Ein Vorteil ist auch das günstige und gut reproduzierbare Löseverhalten, da Haftreibungseffekte innerhalb der Kupplung kaum auftreten können.

In Fig. 11 und 12 ist entsprechend zu Fig. 1 die Ausführung und der konkrete Anwendungsfall beim Kompaktkombizylinder dargestellt.

Wie bereits erwähnt spielt das Löseverhalten der Kupplung für die Gesamtfunktion des Kompaktkombizylinders eine wichtige Rolle. Damit bei der Kupplung ein gutes Löseverhalten erreicht wird ist es auch notwendig, dass der mit Druckluft beaufschlagte Betätigungskolben mit einer geringen Funktionshysterese arbeitet.

Bei der in Fig. 7 dargestellten Ausführung dient der Kolben 104 nicht nur für die Betätigung der Sperrkupplung 116 sondern auch für die Übertragung des Kupplungsmoments. Der Sperrmechanismuskolben 121 ist daher drehfest im Kolben 104 verschieblich gelagert. Damit der Sperrmechanismuskolben 121 in axialer Richtung in seiner Bewegungsfähigkeit nicht beeinträchtigt wird ist eine reibungsarme Drehmomentübertragung erforderlich.

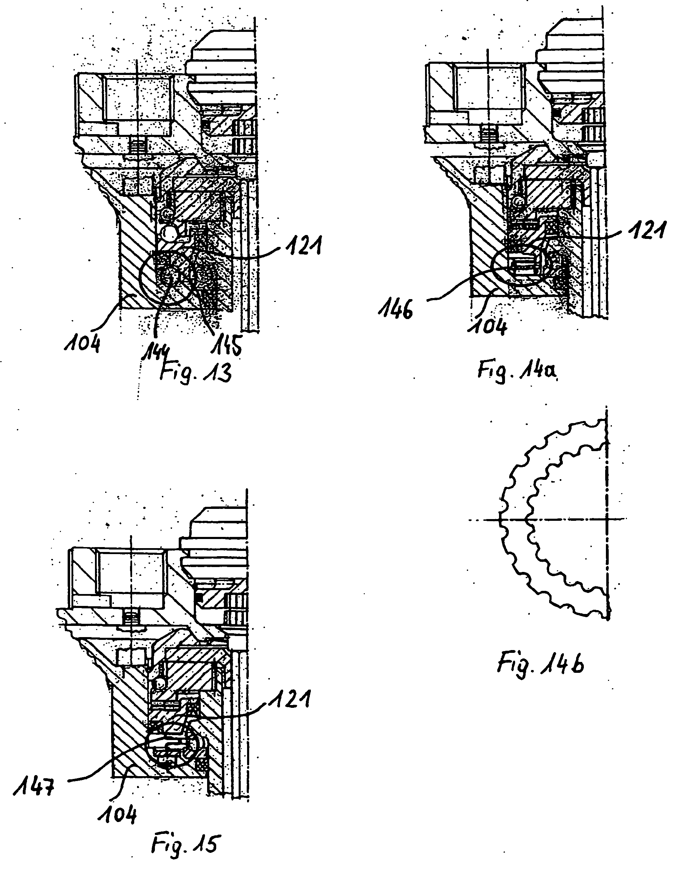

Verschiedene Arten der Ankopplung des Sperrmechanismuskolbens 121 an den Kolben 104 sind in den Fig. 13 bis 15 zusammengestellt, welche dieser Anforderung gerecht werden.

In Fig. 13 werden für die Kraftübertragung vom beweglichen Sperrmechanismuskolben 121 zum festen Kolben(Gehäuse) 104 Kugeln 144 verwendet. Die Kugeln 144 sind dabei sowohl im Sperrmechanismuskolben 121 als auch im umgebenden Kolben 104 - in dessen Aufnahmeraum 117 in axial laufenden Nuten 145 eingebettet. Dadurch wird erreicht, dass sich zwar die Kugeln 144 und somit der Sperrmechanismuskolben 121 axial mit geringer Reibung bewegen können in Umfangsrichtung hingegen eine Kraftübertragung möglich ist.

Eine andere Möglichkeit stellt die Ankopplung des Kolbens an das Gehäuse durch eine Tellerfeder 146 dar (Bild 14a und 14b). Die Tellerfeder hat am äußeren Umfang und in der Bohrung eine Profilierung in die der Sperrmechanismuskolben 121 bzw. den Kolben 104 mit einem entsprechenden Gegenprofil eingreift. So ist es möglich Umfangskräfte zu übertragen ohne dass der Kolben bei axialer Bewegung wesentliche Reibungskräfte überwinden muss. Die Tellerfeder 146 kann bei entsprechendem Einbau zusätzlich noch als Rückstellfeder für den Kolben 121 verwendet werden.

Statt der Tellerfeder kann auch ein Metallbalg 147 verwendet werden, der den Federspeicherkolben 121 axial zum Kolben beweglich lässt, ihn aber in dessen Umfangsrichtung festlegt. Die Wirkungsweise ist so wie eben bei der Tellerfeder beschrieben.

### Bezugszeichenliste

| | |
|---|---|
| Kompakt-Kombibremszylinder | 100 |
| Gehäuse | 101 |
| Deckel | 102 |
| Druckluftanschlüsse | 103 |
| Kolben | 104 |
| Umfangsdichtring | 105 |
| Druckraum | 106 |
| Raum | 107 |
| Rückholfeder | 108 |
| Federspeicherfeder | 109 |
| Federspeicherkolben | 110 |
| Kragen | 111 |
| Kolbenstange | 112 |
| Öffnung | 113 |
| Gewindespindel | 114 |
| Sperrmechanismus | 116 |
| Aufnahmeraum | 117 |
| Wälzkörper | 118 |
| Ausnehmung | 119 |
| Bolzen | 120 |
| Sperrmechanismuskolben | 121 |
| Kolbendichtungen | 122, 123 |
| Druckraum | 124 |
| Wälzkörper | 125 |
| Ratschenmechanismus | 126 |
| Drehvorrichtung | 127 |
| Buchse | 128 |
| Bolzen | 129 |
| Lagerscheibe | 132 |
| Sperrklinke | 133 |
| Steuerscheibe | 134 |
| Topfscheibe | 135 |
| Betätigungsdorn | 136 |
| Stift | 137 |
| Blattfeder | 138 |
| Steuerkontur | 139 |
| Langloch | 140 |
| Kugeln | 141 |
| Klemmtaschen | 142 |
| Rille | 143 |
| Kugeln | 144 |
| Nuten | 145 |
| Tellerfeder | 146 |
| Metallbalg | 147 |
| Konuskupplung | 149 |
| Lamellenkupplung | 151 |

## Patentansprüche

1. Bremszylinder für pneumatisch betätigte Fahrzeugbremsen mit
a. einem Federspeicherbremsabschnitt zur Durchführung von Feststellbremsvorgängen mittels einer Federspeicherfeder (109), und einem Betriebsbremsabschnitt zur Durchführung druckluftbetätigter Betriebsbremsungen, wobei der Federspeicherbremsabschnitt und der Betriebsbremsabschnitt zu einer baulichen Einheit in einem Gehäuse (101) zusammengefasst sind,
b. wobei das Gehäuse (101) von einem Kolben (104) in zwei Räume (106, 107) unterteilt ist, von denen der eine der beiden Räume (106) als Druckraum zum Betätigen des Betriebsbremsabschnittes dient, und wobei die Federspeicherfeder (109) des Federspeicherabschnittes in dem weiteren Raum (107) auf der gegenüberliegenden Seite des Kolbens (104) angeordnet ist,
c. wobei die Federspeicherfeder (109) auf einen weiteren Federspeicherkolben (110) im Raum (107) wirkt, der mittels eines pneumatisch betätigbaren Sperrmechanismus (116) gegenüber dem Kolben (104) arretierbar und durch Lösen des Sperrmechanismus von diesem lösbar ist, und der direkt oder über weitere Elemente mit einer Kolbenstange (112) zum Betätigen der Fahrzeugbremse verbunden ist,
d. wobei nach dem Lösen des Sperrmechanismus (116) die Federspeicherfeder (109) zwischen den beiden Kolben (104, 110) wirkt und diese bei einer Feststellbremsung relativ zueinander verschiebt,
e. wobei der Sperrmechanismus als pneumatisch betätigbare Kupplung (116) ausgelegt ist,
**dadurch gekennzeichnet, dass**
f. der Sperrmechanismus (116) zwischen den Axialflächen einer Lagerscheibe (132) und einem Sperrmechanismuskolben (121) ausgebildet ist und als Übertragungselemente innerhalb des Sperrmechanismus (116) als Klemmkugeln wirkende Kugeln (141) aufweist.

2. Bremszylinder nach Anspruch 1, **dadurch gekennzeichnet, dass** der durch die Federspeicherfeder (109) belastete Federspeicherkolben (110) mit einer Gewindespindel (114) in Eingriff steht, die mit der Kupplung (116) als pneumatisch betätigbarer Sperrmechanismus in Wirkverbindung steht, so dass im Lösezustand des Bremszylinders die Spindel (114) gegen Drehung gesichert ist, und dass durch Verringerung oder Aufhebung des Eingriffs der Kupplung (116) die Gewindespindel (114) drehfähig ist, so dass durch die Entspannung der Federspeicherfeder (109) der Federspeicherkolben (110) in Längsrichtung der Gewindespindel (114) verfahrbar ist.

3. Bremszylinder nach einem der vorstehenden Ansprüche, **dadurch gekennzeichnet, dass** die Kupplung (116) als Reibungs- bzw.- Rutschkupplung ausgelegt ist.

4. Bremszylinder nach Anspruch 1 oder 2, **dadurch gekennzeichnet, dass** die Kupplung (116) als formschlüssige Klauenkupplung ausgelegt ist.

5. Bremszylinder nach Anspruch 3, **dadurch gekennzeichnet, dass** die Reibungskupplung als Konuskupplung (149) ausgelegt ist.

6. Bremszylinder nach einem der vorstehenden Ansprüche, **dadurch gekennzeichnet, dass** die Kugeln (141), die als Klemmkugeln wirken, in einer Kupplungshälfte in Klemmtaschen (142) liegen, welche so gestaltet sind, dass die Kugeln (141) in axialer Richtung ungehindert rollen können, dass aber in der tangentialen Richtung hingegen keine Bewegung möglich ist.

7. Bremszylinder nach Anspruch 6, **dadurch gekennzeichnet, dass** die Kugeln (141), die als Klemmkugeln wirken, in der anderen Kupplungshälfte in eine umlaufende, dem Kugeldurchmesser angepasste Rille (143) gedrückt sind, um eine für die Kupplungskraft bestimmende Reibung zu erzeugen wird.

8. Bremszylinder nach Anspruch 3, **dadurch gekennzeichnet, dass** die Reibungskupplung als Lammellenkupplung (151) ausgebildet ist.

9. Bremszylinder nach Anspruch 4, **dadurch gekennzeichnet, dass** die Klauenkupplung als die eine Kupplungshälfte einen pneumatisch betätigbaren Sperrmechanismuskolben (121) aufweist, der im Kolben (104) verschieblich gelagert ist, aber relativ zu diesem unverdrehbar ist.

10. Bremszylinder nach Anspruch 9, **dadurch gekennzeichnet, dass** für die Kraftübertragung vom beweglichen Sperrmechanismuskolben (121) zum Kolben (104) Kugeln (144) verwendet werden.

11. Bremszylinder nach Anspruch 10, **dadurch gekennzeichnet, dass** die Kugeln (144) sowohl im Sperrmechanismuskolben (121) als auch im umgebenden Kolben (104) in axial laufenden Nuten (145) eingebettet sind.

12. Bremszylinder nach einem der vorstehenden Ansprüche 9 bis 11, **dadurch gekennzeichnet, dass** der Sperrmechanismuskolben (121) an den Kolben (104) durch eine Tellerfeder (146) angebunden ist.

13. Bremszylinder nach Anspruch 12, **dadurch gekennzeichnet, dass** die Tellerfeder (146) am äußeren Umfang und in der Bohrung eine Profilierung aufweist; in die der Sperrmechanismuskolben (121) bzw. der Kolben 104 mit einem entsprechenden Gegenprofil eingreifen.

14. Bremszylinder nach Anspruch 12 oder 13, **dadurch gekennzeichnet, dass** die Tellerfeder (146) als Rückstellfeder für den Sperrmechanismuskolben (121) verwendet wird.

15. Bremszylinder nach einem der vorstehenden Ansprüche 9 bis 11, **dadurch gekennzeichnet, dass** der Sperrmechanismuskolben (121) an den Kolben (104) durch einen Metallbalg (148) angebunden ist.

## Claims

1. Brake cylinder for pneumatically actuated vehicle brakes, comprising
a. a spring brake section for performing parking brake operations by means of an accumulator spring (109) and a service brake section for performing pneumatically actuated service brake operations, wherein the spring brake section and the service brake section are combined to form a structural unit in a housing (101),
b. wherein the housing (101) is divided into two chambers (106, 107) by a piston (104), of which one chamber (106) serves as a pressure chamber for the actuation of the service brake section, and wherein the accumulator spring (109) of the spring brake section is disposed in the other chamber (107) on the opposite side of the piston (104),
c. wherein the accumulator spring (109) acts on a further accumulator piston (110) in the chamber (107), which can be locked against the piston (104) by means of a pneumatically operated locking mechanism (116) and released therefrom by releasing the locking mechanism and which is connected either directly or via further elements to a piston rod (112) for the actuation of the vehicle brake,
d. wherein, following the release of the locking mechanism (116), the accumulator spring (109) acts between the two pistons (104, 110) and displaces them relative to each other in a parking brake operation,
e. wherein the locking mechanism is designed as a pneumatically operated clutch (116),
**characterised in that**
f. the locking mechanism (116) is formed between the axial surfaces of a bearing washer (132) and a locking mechanism piston (121) and is provided with balls (141) acting as clamping balls to represent the transmission elements within the locking mechanism (116).

2. Brake cylinder according to claim 1, **characterised in that** the accumulator piston (110) loaded by the accumulator spring (109) is in engagement with a threaded spindle (114) in active connection with the clutch (116) as a pneumatically operated locking mechanism, so that the spindle (114) is secured against rotation in the release state of the brake cylinder, and **in that** the threaded spindle (114) is enabled to rotate by reducing or cancelling the engagement of the clutch (116), so that the accumulator piston (110) can be displaced in the longitudinal direction of the threaded spindle (114) by releasing the accumulator spring (109).

3. Brake cylinder according to any of the preceding claims, **characterised in that** the clutch (116) is designed as a friction or overload slipping clutch.

4. Brake cylinder according to claim 1 or 2, **characterised in that** the clutch (116) is designed as a positive dog clutch.

5. Brake cylinder according to claim 3, **characterised in that** the friction clutch is designed as a cone clutch (149).

6. Brake cylinder according to any of the preceding claims, **characterised in that** the balls (141) which act as clamping balls lie in a clutch half in clamping pockets (142) which are designed such that the balls (141) can roll without impediment in the axial direction but no movement is possible in the tangential direction.

7. Brake cylinder according to claim 6, **characterised in that** the balls (141) which act as clamping balls are pushed in the other clutch half into a continuous groove (143) matched to the diameter of the balls in order to generate a friction determining the clutch force.

8. Brake cylinder according to claim 3, **characterised in that** the friction clutch is designed as a multi-plate clutch (151).

9. Brake cylinder according to claim 4, **characterised in that** the dog clutch, as the one clutch half, comprises a pneumatically operated locking mechanism piston (121) which is displaceably supported in the piston (104) but non-rotatable relative thereto.

10. Brake cylinder according to claim 9, **characterised in that** balls (144) are used for power transmission from the movable locking mechanism piston (121) to the piston (104).

11. Brake cylinder according to claim 10, **characterised in that** the balls (144) are embedded in axially extending grooves (145) both in the locking mechanism piston (121) and in the surrounding piston (104).

12. Brake cylinder according to any of claims 9 to 11, **characterised in that** the locking mechanism piston (121) is attached to the piston (104) by a Belleville spring (146).

13. Brake cylinder according to claim 12, **characterised in that** the Belleville spring (146) has at the outer circumference and in the bore a profile which the locking mechanism piston (121) or the piston (104) respectively engages with a corresponding mating profile.

14. Brake cylinder according to claim 12 or 13, **characterised in that** the Belleville spring (146) is used as a return spring for the locking mechanism piston (121).

15. Brake cylinder according to any of claims 9 to 11, **characterised in that** the locking mechanism piston (121) is attached to the piston (104) by a metal bellows (148).

## Revendications

1. Cylindre de frein pour des freins de véhicule à actionnement pneumatique, comprenant
a. une section de frein à ressort accumulateur pour effectuer des opérations de freinage de stationnement au moyen d'un ressort (109) accumulateur et une section de frein de service pour effectuer des freinages de service à actionnement par de l'air comprimé, la section de frein du ressort accumulateur et la section de frein de service étant rassemblées en une unité de construction dans une enveloppe (101),
b. dans lequel l'enveloppe (101) est subdivisée par un piston (104) en deux chambres (106, 107), dont l'une (106) sert de chambre de pression pour l'actionnement de la section de frein de service et dans lequel le ressort (109) accumulateur de la section de ressort accumulateur est placé dans l'autre chambre (107) sur la face opposée du piston (104),
c. dans lequel le ressort (109) accumulateur agit dans la chambre (107) sur un autre piston (110) de ressort accumulateur, qui peut être bloqué par rapport au piston (104) au moyen d'un mécanisme (116) de blocage pouvant être actionné pneumatiquement, et peut être détaché de celui-ci en débloquant le mécanisme de blocage, et qui est relié directement ou par des éléments supplémentaires à une tige (112) de piston pour l'actionnement du frein du véhicule,
d. dans lequel, après avoir débloqué le mécanisme (116) de blocage, le ressort (109) accumulateur agit entre les deux pistons (104, 110) et les déplacent l'un par rapport à l'autre pour un freinage de stationnement,
e. dans lequel le mécanisme de blocage est conçu sous la forme d'un accouplement (116) pouvant être actionné pneumatiquement,
**caractérisé en ce que**
f. le mécanisme (116) de blocage est constitué entre les surfaces axiales d'un disque (132) formant palier et d'un piston (121) du mécanisme de blocage et comporte comme élément de transmission, au sein du mécanisme (116) de blocage, des billes (141) servant de billes de serrage.

2. Cylindre de frein suivant la revendication 1, **caractérisé en ce que** le piston (110) à ressort accumulateur, soumis à l'action du ressort (109) accumulateur, vient en prise avec une broche (114) filetée, qui coopère, en tant que mécanisme de blocage pouvant être actionné pneumatiquement, avec l'accouplement (116), de sorte qu'à l'état desserré du cylindre de frein la broche (114) est empêchée de tourner et **en ce qu'**en diminuant ou en mettant fin à la prise de l'accouplement (116), la broche (114) filetée est susceptible de tourner, de sorte que, par la détente du ressort (109) accumulateur, le piston (110) de ressort d'accumulateur peut être déplacé dans la direction longitudinale de la broche (114) filetée.

3. Cylindre de frein suivant l'une des revendications précédentes, **caractérisé en ce que** l'accouplement (116) est constitué sous la forme d'un embrayage à friction ou d'un embrayage à patinage.

4. Cylindre de frein suivant la revendication 1 ou 2, **caractérisé en ce que** l'accouplement (116) est conçu sous la forme d'un crabotage à complémentarité de forme.

5. Cylindre de frein suivant la revendication 3, **caractérisé en ce que** l'embrayage à friction est conçu sous la forme d'un embrayage (149) à cône.

6. Cylindre de frein suivant l'une des revendications précédentes, **caractérisé en ce que** les billes (141), qui servent de billes de serrage, se trouvent dans une moitié de l'accouplement dans des poches (142) de serrage, qui sont telles que les billes (141) peuvent rouler sans obstacle dans la direction axiale, mais en revanche, qu'aucun déplacement n'est possible dans la direction tangentielle.

7. Cylindre de frein suivant la revendication 6, **caractérisé en ce que** les billes (141), qui servent de billes de serrage, sont repoussées dans les autres moitiés de l'accouplement dans une rainure (143) faisant le tour et adaptée au diamètre des billes pour produire un frottement déterminant la force d'accouplement.

8. Cylindre de frein suivant la revendication 3, **caractérisé en ce que** l'embrayage à friction est constitué sous la forme d'un embrayage (151) à lamelles.

9. Cylindre de frein suivant la revendication 4, **caractérisé en ce que** le crabotage comporte, en tant que les une moitié d'embrayage, un piston (121) de mécanisme de blocage à actionnement pneumatique, qui est monté coulissant dans le piston (104), mais sans pouvoir tourner par rapport à celui-ci.

10. Cylindre de frein suivant la revendication 9, **caractérisé en ce qu'**on utilise des billes pour transmettre la force du piston (121) mobile du mécanisme de blocage au piston (104).

11. Cylindre de frein suivant la revendication 10, **caractérisé en ce que** des billes (144) sont incorporées dans des rainures (145) faisant le tour axialement, tant dans le piston (121) du mécanisme de blocage qu'également dans le piston (104) qui est autour.

12. Cylindre de frein suivant l'une des revendications précédentes 9 à 11, **caractérisé en ce que** le piston (121) du mécanisme de blocage est relié au piston (104) par un ressort (146) à disque.

13. Cylindre de frein suivant la revendication 12, **caractérisé en ce que** le ressort (146) à disque comporte sur le pourtour extérieur et dans le trou un profilage dans lequel le piston (121) du mécanisme de blocage ou le piston (104) pénètre par un profil antagoniste correspondant.

14. Cylindre de frein suivant la revendication 12 ou 13, **caractérisé en ce que** le ressort (146) à disque est utilisé comme ressort de rappel du piston (121) du mécanisme de blocage.

15. Cylindre de frein suivant l'une des revendications précédentes 9 à 11, **caractérisé en ce que** le piston (121) du mécanisme de blocage est relié au piston (104) par un soufflet (148) métallique.
